# EUROPEAN PATENT SPECIFICATION

(11) **EP 0 364 738 B1**
(45) Date of publication and mention of the grant of the patent: **24.08.1994**
(21) Application number: 89117090.4
(22) Date of filing: 15.09.1989
(51) Int. Cl.: C08G 18/80, C08G 18/54, C08G 18/36, C08G 18/66, C08G 18/40, C08G 18/72, C09D 175/04

(54) **Castor oil based polyurethane for underbody coatings and the like**
Auf Rizinusöl basierende Polyurethane für Unterboden-Beschichtungen und ähnliche Verwendungen
Polyuréthanes à base d'huile de ricin pour le revêtement de la partie inférieure de châssis et applications apparentées

(30) Priority: 21.09.1988 US 247137; 22.06.1989 US 369970
(43) Date of publication of application: 25.04.1990
(73) Proprietor: W.R. Grace & Co.-Conn., New York, New York 10036 (US)
(72) Inventor: Vu, Cung, Columbia, MD 21044 (US); Blank, Norman E., D-6900 Heidelberg (DE)
(74) Representative: UEXKÜLL & STOLBERG

(56) References cited:
- EP-A- 0 280 981
- GB-A- 1 182 884
- GB-A- 1 369 334

## Description

### Related Applications

This is a continuation-in-part of an application having Serial Number 245,869, filed September 16, 1988, Vu, which is a continuation-in-part of co-pending application having Serial Number 209,406, Vu et al, which was filed May 19, 1988.

### Field of the Invention

This invention relates to the field of polyurethane resins and coatings made therefrom, especially the field of resins and coatings which have utility as an automotive underbody coating.

### Background of the Invention

Two-component mixes for the preparation of polyurethane resins are well known. As a matter of fact, in an elemental sense, the first polyurethane resins were made by mixing two components, which is to say, by reacting together a polyol as one component and a diisocyanate as the other. This concept has become greatly refined and improved upon during the subsequent growth of the polyurethane resin industry. As a result, various two-component mixes have been reported. Two-component mixes are described, for example, in U.S. Patents 4,410,597 and 4,101,473. Polyurethane coatings are known for use in the auto industry; see UK patent Application 2,147,910A, published May 22, 1985; and U.S. Patents 4,554,188, 4,400,497, and 4,525,570. The use of dibutyl tin dilaurate and triethylene diamine catalysts is well known in the polyurethane art. See, e.g., U.S. Patent 4,124,573.

Castor oil is known as a polyol reactant with diisocyanates to form polyurethanes. Ency. Pol. Sci. and Techn. 3, 25 (1965). An updated technical brochure entitled "Desmophen", available from Mobay Chemical Co., describes "Desmophen"^{(R)} as a "branched polyalcohol with ether and ester groups". The brochure discloses that Desmophen^{(R)} can be reacted with isocyanates (not defined) to make polyurethane coatings for various applications. Our analyses indicate that "Desmophen" as currently available contains castor oil, cyclohexanone formaldehyde condensate, and a small amount of toluene.

U.K. Patent 1,182,884, Gruber and Fehlbier (1970) describes treatment of castor oil with cyclohexanone formaldehyde condensate, thereby providing modified castor oil as used in this invention. Reaction of the modified castor oil with MDI to make a polyurethane resin is also disclosed.

EP-A-0 280 981 discloses a polyisocyanate composition comprising MDI (diphenylmethane-4,4'-diisocyanate which has to be reacted with polyether polyol to give a polyurethane composition suitable for underbody coatings. While it is true that the compositions disclosed in said document are suitable as underbody coatings, subsequent practice tests exhibited frequently excessive foam formation of the cured coating. Further work indicated that this foaming might be due to water absorption either during storage of the polyol component or, more severely, during the time period between application of the polyurethane mixture and the complete curing of the coating. This water absorption would then result in excessive foaming of the cured coating thus reducing the abrasion resistance below tolerance. Several options were considered to reduce the foaming: the polyisocyanate, the catalyst or the polyol.

### Summary of the Invention

An object of the invention involves reacting together two components, A and B, to make a novel polyurethane resin. Component A comprises castor oil, unmodified or modified as herein described. Component B comprises MDI-based polyisocyanates. Other objects will be evident from the following description.

### Detailed Description of the Invention

### Component A

The primary ingredient in Component A is castor oil, used as such (unmodified) or modified in either of two specific ways. In one modification (Modification No. 1), the castor oil contains a small amount (e.g., 2-3 weight %) of cyclohexanone-formaldehyde condensate as described in U.K. Patent 1,182,884, above cited. In the second modification (Modification No. 2), a polyester polyol made by reacting neopentyl glycol and adipic acid is added to the castor oil produced in Modification No. 1 in an amount of about 30 parts polyester polyol to 70 parts Modification No. 1. Modification No. 2 is considered novel per se.

Component A suitably includes a catalyst system plus inert ingredients that do not affect the subsequent polymerization. To prepare Component A, the castor oil (unmodified or modified) and the catalysts, together with any inert material (fillers, thixotropic agents, etc.), are simply mixed together in a pot. The catalysts will be described in a later Section.

### Component B

Component B comprises:
(a) diphenylmethane diisocyanate (MDI) plus a polyisocyanate prepolymer made by reacting together MDI with a poly(oxypropylene) glycol to produce a compound of the formula:

   K-O-(CH₂CH[CH₃]O)ₘ-K

   wherein K is 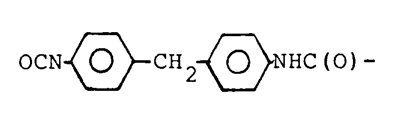 and m is about 2-5, or
(b) a mixture of (a) with a polyisocyanate mixture (c) containing MDI and a polyisocyanate prepolymer of the formula

   K-(CH₂C[CH₃]H-O-)ₚ(CH₂-CH₂-O-)ₜ-K,

   wherein
   K is 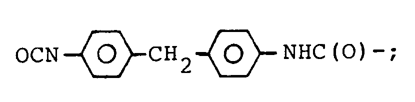 p is about 50; and
   t is in the range of about 18-20
The above materials (a) and (c) are modified MDI's and may be so referred to herein. These modified MDI's will now be described in more detail.

With reference to (a) above, modified MDI can be made by reacting together diphenylmethane 4,4'- or 2,4'-diisocyanate (MDI) with a poly(oxypropylene) glycol of the formula:

HO-C(CH₃)H-CH₂-(-O-C[CH₃]H-CH₂)ₙ-O-CH₂-C(CH₃)H-OH

The value for n lies approximately, between 0 and 3, indicating that the material is a mixture, probably with small amounts of higher and lower molecular weight polymers of the same genus. In the main reaction, the MDI end caps both ends of the poly(oxypropylene) glycol. The prepolymer thus formed may also contain small amounts of other products of the reaction which contain isocyanate and/or hydroxyl groups. The resulting prepolymer has the formula described in (a) supra. In general, this material may be described as an MDI/polyisocyanate material comprising about 45-50 weight % MDI with the balance being the above described polypropylene prepolymer, i.e., with some prepolymer molecules being relatively small and others larger (depending generally on the amount of capped polyoxypropylene), but with the averages being substantially as above enumerated.

Instead of poly(oxypropylene)glycol, oxyethylene and oxybutylene glycols can be used with similar results.

The above mentioned polyisocyanate (c) is made in similar fashion; it may contain up to 20% unreacted MDI. As noted, polyisocyanate (b) is a mixture of (a) and (c).

Whereas MDI is a solid, and is very difficult to handle in spray apparatus, the above described MDI/polyisocyanates (a) and (b) are homogeneous liquids and are readily sprayed.

Prepolymer polyisocyanates of the type described in (a) above are available as Mondur XP-744 (Mobay), Isonate 181 (Dow Chemical Co.) etc. Polyisocyanate (c) is available as Mondur XP-743 (Mobay). However, polyisocyanate (b) above is considered novel per se.

The weight ratio of Component A:Component B can vary.

### The Catalyst

The preferred catalyst is equal weights of dibutyl tin dilaurate (DBTDL) with triethylenediamine (DABCO). However, substantially any of the conventional polyurethane catalysts (and combinations thereof) can be used.

These catalysts include:
Tertiary amines:
Triethylene diamine
N-methyl morpholine
N-ethyl morpholine
Diethyl ethanolamine
N-coco morpholine
1-methyl-4-dimethylamino ethyl piperazine
3-methoxy-N-dimethyl propyl amine
N-dimethyl-N'-methyl isopropyl propylene diamine
N,N-diethyl-3-diethyl amino propylamine
N,N-dimethyl benzyl amine
Dicyclohexylmethylamine
2,4,6-tris dimethylaminomethylphenol
N,N-dimethyl cyclohexylamine
Triethylamine
Tri-n-butylamine
1,8-diaza-bichloro[5,4,O]-undecene-7
N-methyl diethanolamine
N,N-dimethyl ethanolamine
N,N-diethyl cyclohexylamine
N,N,N'N'-tetramethyl-ethylene diamine
1,4-diaza-bicyclo-[2,2,2]-octane
N-methyl-N'-dimethylaminoethyl-piperazine
Bis-(N,N-diethylaminoethyl)-adipate
N,N-diethylbenzylamine
Pentamethyldiethylene triamine
N,N,N'N'-tetramethyl-1,3-butanediamine
1,2-dimethylimidazole
2-methylimidazole
Tin compounds:
Stannous chloride
Dibutyl tin di-2-ethyl hexoate
Stannous octoate
Dibutyl tin dilaurate
Trimethyl tin hydroxide
Dimethyl tin dichloride
Dibutyl tin diacetate
Dibutyl tin oxide
Tributyl tin acetate
Tetramethyl tin
Dimethyl dioctyl tin
Tin ethyl hexoate
Tin laurate
Dibutyl tin maleate
Dioctyl tin diacetate
Other metal organics:
Zinc octoate
Phenyl mercuric propionate
Lead octoate
Lead naphthenate
Copper naphthenate
As to the amount of catalysts(s), the preferred amount of tertiary amine catalyst is about 0.01 to 3.0%, based on the total weight of castor oil (unmodified or modified) plus polyisocyanate. When using a tin compound or other metal-containing catalyst, an equal amount is suitable. Mixtures of tertiary amines and organo-metallics are particularly suitable as catalysts for this invention.

When curing periods extending over several hours are acceptable, the catalyst may be omitted altogether.

### Mixing Components A and B - Application to Substrate

For small batches, A and B can be mixed in an open container at room temperature. Reaction occurs very quickly, forming the desired polyurethane resin, which can then be spread on a substrate by using a paint brush, roller or like applicator. In production work for which the resin is designed, a conventional two-liquid air spray gun gives the best results.

The mixing ratio of component A to B depends upon the reactive ingredients of the polyol component and the isocyanate component. The most preferred ratio is at a stoichiometric ratio of isocyanate to polyol of 1 : 1, however, small variations to either side may be advantageous.

In all cases, where the polyisocyanate mixture (c) is used, the preferred mixing ratio of component A to B is about 1 : 1 by weight.

Application is suitably made at room temperature. The resin can be applied at higher temperatures, if desired, e.g., 25°C-37°C (80-100°F). The coated article is tack-free within a time ranging from minutes to hours, depending on the amount of catalyst and cures at room temperature without being heated. However, it is not harmed by subsequent conventional baking steps that may occur in an auto assembly line.

When testing the coatings, a mixture of Component A and Component B was coated on 10.16 cm x 30.48 cm (4" x 12") steel panels that had been electrocoated with a conventional primer composition (an "E" coat), e.g., a composition which is commercially available from PPG Industries under the tradenames "3150" or "3150A". The claimed coatings were fully cured at room temperature prior to testing.

### Additives

Various conventional materials which are inert to the formation of the polyurethane resin from the two Components A and B can be added, e.g., thixotropic agents such as fumed silica, anti-oxidants, antiblistering agents, reinforcing agents (fibers, platelets, crosslinkers, latexes, etc.), thickeners, plasticizers, UV stabilizers, pigments and extenders such as silica, barytes, carbon black, titanium dioxide (and the like), pigment dispersants, corrosion inhibitors, etc. These materials can be added to A, to B, or the mixture of A and B, in amounts ranging from about 0.01 to 25.0% by weight of the total mixture.

### The Substrate

Although the novel polyurethane resin of the invention is designed primarily for the automotive industry as an undercoating for steel frames, rocker panels, wheel wells, etc., the resin is also a useful coating for nonferrous articles (Al, Cu, Mg), wood, fabrics, concrete, plastics, rubber, glass, ceramics, fiber, paper and the like. The resin of the invention is also useful as an undercoating for rail equipment (locomotives, coaches, freight cars, street cars, subway cars, etc.), buses, ships and farm equipment. It is particularly useful in coating substrates exposed to salt and marine environments. Such substrates include steel structures for highways and bridges exposed to road salt, as well as interior and exterior steel surfaces on ships and other structures on or near oceans or inland salt lakes. It can be used as a primer, an intermediate coating or as a final coating. It is also paintable; i.e., after curing, it can be painted with conventional paints.

As mentioned, a particularly useful application is as an automotive undercoating. In view of the commercial importance of this use, some requirements currently in demand in the automobile industry are listed below.

The resin system should
(1) be solventless;
(2) be readily sprayable, at room temperature or at elevated temperatures;
(3) provide a tack-free coating within a few minutes, e.g., dry to touch within 30 minutes;
(4) provide a fully cured coating within 24 hours;
(5) provide a coating with excellent adhesion;
(6) provide a coating with excellent abrasion resistance;
(7) provide a coating with no sag at a minimum of 254 »m (10 mils) dry; and
(8) provide a coating that is stable through the paint oven conditions.

The invention meets the above criteria in all essential respects.

The following examples merely illustrate the claimed invention and are not intended to limit the scope of the claims reciting such invention.

The designation of the polyol and isocyanate ingredients refers to the explanations given in the corresponding segments of the description i.e. component A and component B respectively.

The isocyanate (a) is commercially available as Mondur XP-744 and the isocyanate (c) is commercially available as Mondur XP-743.
Isocyanate (b) is a mixture of (a) and (c) of about 1 : 3 by weight.

### Example 1

| | |
|---|---|
| Component A Castor oil | 340g |
| Component B Polyisocyanate Mixture (a) (XP-744) | 179g |

Component A was mixed with B, with the resulting polyurethane resin product being coated on panels. The coating became tack-free within hours. (If a catalyst is used, its product becomes tack free within minutes.) The dry German Sablux abrasion result (test description below) was 317.5 »m/251 secs (12.1 mils/251 secs.) The peel strength results were excellent.

### Example 2

| | |
|---|---|
| Component A Castor oil, Modification No. 1 described supra | 680 g. |
| Component B Polyisocyanate (b), a mixture of 179g Polyisocyanate (a), and 525g Polyisocyanate (c). | 704 g. |

The preferred weight ratio of polyisocyanate (a) to polyisocyanate (c) is about 1:3.

The polyurethane resin obtained by mixing Components A and B together was coated on panels and became tack-free after 1 day. The Sablux abrasion test result for this material was 320 »m/400 (12.6 mils/400) secs. The peel strength was excellent.

### Example 3

| | Parts by Weight |
|---|---|
| Component A Castor Oil Modification No. 2^{a} | 94 |

| Additives | |
|---|---|
| DT | 1 |
| Desmondur E22 | 4 |
| Carbon pigment | 0.05 |
| TiO₂ pigment | 0.9 |
| Fumed silica, thixotropic agent | 0.05 |
| | 100.00 |
| Component B Polyisocyanate (b), Polyisocyanate (a) and Polyisocyanate (c) described supra to make | 100.00 |
| total parts of A and B | 2̅0̅0̅.̅0̅0̅ |

| | |
|---|---|
| ^{a}Includes neopentyl glycol-adipic reaction product; see description above. | |

The above formulation is particularly useful as an auto underbody coating.

The polyurethane resin of Example 3 was coated on panels and tested for abrasion by the Sablux procedure. Results are given in the following table.

**Table 1**

| Sablux Abrasion Results | |
|---|---|
| Coating thickness (microns) | Time to break (seconds) |
| 150 | 17 |
| 400 | 224 |
| 460 | 311 |
| 650 | 639 |

Sablux Abrasion Test. The coatings are tested for abrasion resistance in both the dry and wet state by the well known Sablux procedure. The wet coatings to be tested are soaked in a water bath for 24 hours prior to abrasion testing. The test is the same for both the dry and wet panels. The test consists of shot blasting the urethane polymer coated panel (positioned horizontally) with a crushed spherical cast steel shot type GP-14 Wheelabrator-Allevard at an air pressure of 2.46 kg/cm² (35 psi) at an angle of 60° until full penetration of the coating to expose bare steel is visibly noted. For dry or wet sample of 15-mil thickness, a blasting period in excess of 200 seconds is considered commercially acceptable. The actual results are rarely exactly 381 »m (15 mils) or 200 seconds, but are readily extrapolated to these criteria. Thus, in Example 2, where a coating of 320 »m (12.6 mils) endured to 400 seconds, this is equivalent to (200 x 12.6)/400 = 160 »m (6.3 mils) for 200 seconds or (15 x 400)12.6 = 381 »m (15 mils) for 476 seconds. Similar conversions can be made for the data in Example 3.

Peel Test (Adhesion). This test was used for the coatings. A strip of brass screen approximately 500 »m mesh size 2.54 x 25.4 cm (0.020 mesh), (1" x 10"), is taped to both ends of electrocoated steel panels 2.54 x 12.7 cm (1" x 5") leaving an excess of screen at one end. The mixes of Components A and B from the Examples were each applied to a separate panel through the screen to mesh with the panel substrate and then allowed to cure. After curing, the tape was removed from the end with the excess screen, allowing it to be peeled at 180° from the panel. The adhesion is measured for these coatings in kg per cm pounds per linear inch (pli).

## Claims

1. Composition comprising two separate components, A and B, wherein component A is a member of the group consisting of
(a) unmodified castor oil,
(b) castor oil containing 2 - 3 % by weight a cyclohexanone/formaldehyde-condensate, and
(c) a mixture of
about 70% by weight (b) and
about 30% by weight of a polyester polyol reaction product from neopentyl glycol and adipic acid;
and component B is a polyisocyanate composition consisting of either
(d) a mixture of 50 - 55% by weight of
(i) a prepolymer of the formula
K-O-(CH₂CH(CH₃)O)ₘ-K,
wherein K is 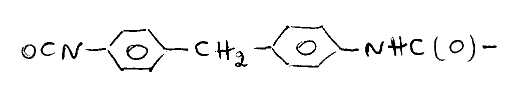 and m is 2 - 5,
and 45 - 50% by weight of
(ii) a diphenylmethane diisocyanate from the group consisting of
diphenylmethane-4,4'-diisocyanate,
diphenylmethane-4,2'-diisocyanate and
diphenylmethane-2,4'-diisocyanate, or
(e) a mixture of a prepolymer having the formula
K-O-(CH₂C(CH₃)H-O-)ₚ(CH₂CH₂O-)ₜ-K,
wherein
K is as above defined in (d)(i),
p is about 50 and
t is in the range of 18 - 20,
and up to 20% by weight a diphenylmethane diisocyanate from the group consisting of
diphenylmethane-4,4'-diisocyanate,
diphenylmethane-4,2'-diisocyanate and
diphenylmethane-2,4'diisocyanate, or
(f) a mixture obtained by blending (d) and (e).

2. Composition according to Claim 1 wherein said composition contains at least one additive selected from the group consisting of thixotropic agents, anti-oxidants, antiblistering agents, reinforcing, agents, thickeners, plasticizers, UV stabilizers, pigments, extenders, pigment dispersants, and corrosion inhibitors in amounts ranging from 0.01 to 25.0% by weight of the total composition.

3. Polyurethane resin obtained by reacting Component A with Component B according to Claim 1.

4. Polyurethane resin according to claim 3 wherein Component A comprises castor oil containing 2-3% by weight cyclohexanone-formaldehyde condensate and Component B comprises polyisocyanate mixture (f) and the ratio of Component A to Component B is about 1:1.

5. Process of forming a polyurethane resin comprising mixing together Component A with Component B, both components being as defined in Claim 1.

6. Coated article comprising a substrate and a coating adhered thereon, said coating comprising the resin of Claims 3 or 4.

7. Article according to Claim 6, wherein the substrate is an automotive body part.

8. Method of protecting automotive body parts against abrasion comprising coating said body parts with the resin of Claims 3 or 4.

9. Process according to Claim 5 wherein Component A comprises a mixture of about 70% by weight castor oil containing 2-3% by weight cyclohexanone-formaldehyde condensate and about 30% by weight of a polyester polyol reaction product from neopentyl glycol and adipic acid, and Component B comprises a polyisocyanate mixture as defined by mixture (f) in Claim 1.

## Patentansprüche

1. Zusammensetzung, die zwei separate Komponenten, A und B, umfaßt, wobei Komponente A zur Gruppe bestehend aus
(a) unmodifiziertem Castoröl,
(b) Castoröl, das 2 bis 3 Gew.-% Cyclohexanon/Formaldehyd-Kondensat enthält, und
(c) einer Mischung aus
etwa 70 Gew.-% (b) und
etwa 30 Gew.-% eines Polyesterpolyolreaktionsprodukts aus Neopentylglykol und Adipinsäure gehört
und Komponente B eine Polyisocyanatzusammensetzung ist, die aus entweder
(d) einer Mischung aus 50 bis 55 Gew.-%
(i) eines Präpolymers der Formel
K-O-(CH₂CH(CH₃)O)ₘ-K,
in der K 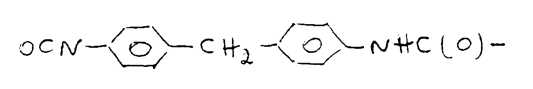 ist und m 2 bis 5 ist,
und 45 bis 50 Gew.-%
(ii) eines Diphenylmethandiisocyanats aus der Gruppe bestehend aus
Diphenylmethan,4,4,-diisocyanat,
Diphenylmethan-4,2'-diisocyanat und
Diphenylmethan-2,4'-diisocyanat oder
(e) eine Mischung aus einem Präpolymer der Formel
K-O-(CH₂C(CH₃)H-O-)ₚ(CH₂CH₂O-)ₜ-K,
in der
K wie oben in (d) (i) definiert ist,
p etwa 50 ist und
t im Bereich von 18 bis 20 liegt,
und bis zu 20 Gew.-% eines Diphenylmethandiisocyanats aus der Gruppe bestehend aus
Diphenylmethan-4,4'-diisocyanat,
Diphenylmethan-4,2'-diisocyanat und
Diphenylmethan-2,4'-diisocyanat oder
(f) eine Mischung ist, die durch Mischen von (d) und (e) erhalten wird.

2. Zusammensetzung nach Anspruch 1, bei der diese Zusammensetzung mindestens ein Additiv ausgewählt aus der Gruppe bestehend aus thixotropen Mitteln, Antioxidantien, Anti-Blasenbildungsmitteln, Verstärkungsmitteln, Verdickern, Weichmachern, UV-Stabilisatoren, Pigmenten, Streckmitteln, Pigmentdispergiermitteln und Korrosionsinhibitoren in Mengen im Bereich von 0,01 bis 25 Gew.-% der gesamten Zusammensetzung enthält.

3. Polyurethanharz, das durch Umsetzung von Komponente A mit Komponente B gemäß Anspruch 1 erhalten wird.

4. Polyurethanharz nach Anspruch 3, bei dem Komponente A Castoröl umfaßt, das 2 bis 3 Gew.-% Cyclohexanon/Formaldehyd-Kondensat enthält, und Komponente B eine Polyisocyanatmischung (f) umfaßt, wobei das Verhältnis von Komponente A zu Komponente B etwa 1 : 1 ist.

5. Verfahren zur Herstellung eines Polyurethanharzes, bei dem Komponente A mit Komponente B gemischt wird, wobei beide Komponenten wie in Anspruch 1 definiert sind.

6. Beschichteter Gegenstand, der ein Substrat und eine daran haftende Beschichtung umfaßt, wobei die Beschichtung das Harz gemäß Anspruch 3 oder 4 umfaßt.

7. Gegenstand nach Anspruch 6, bei dem das Substrat ein Automobilkarosserieteil ist.

8. Verfahren zum Schützen von Automobilkarosserieteilen gegen Abrieb, bei dem die Karosserieteile mit dem Harz gemäß Anspruch 3 oder 4 beschichtet werden.

9. Verfahren nach Anspruch 5, bei dem Komponente A eine Mischung aus etwa 70 Gew.-% Castoröl, das 2 bis 3 Gew.-% Cyclohexanon/Formaldehyd-Kondensat enthält, und etwa 30 Gew.-% eines Polyesterpolyolreaktionsprodukts aus Neopentylglykol und Adipinsäure umfaßt und Komponente B eine Polyisocyanatmischung gemäß der Definition von Mischung (f) in Anspruch 1 umfaßt.

## Revendications

1. Composition contenant deux composants séparés A et B dans laquelle le composant A est un membre du groupe qui est formé de :
a) l'huile de ricin non modifiée
b) l'huile de ricin contenant de 2 à 3% en poids d'un produit de condensation cyclohéxanone-formaldehyde, et
c) un mélange d'environ 70 % en poids de b) et environ 30 % en poids d'un produit de réaction polyester de polyol à partir de néopentylglycol et d'acide adipique
et le composant B est une composition d'isocyanate consistant en
d) un mélange de 50-55 % en poids de
(i) un pépolymère de formule
K-O-(CH₂CH[CH₃]O)ₘ-K
dans laquelle K est 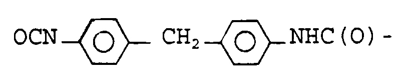 et m est 2-5
et 45-50 % en poids de
(ii) un diphénylméthane diisocyanate choisi dans le groupe formé de
diphénylméthane -4,4'-diisocyanate
diphénylméthane -4,2'-diisocyanate et
diphénylméthane -2,4'-diisocyanate ou
e) un mélange de prépolymère ayant la formule
K-O-(CH₂C(CH₃)H-O-)ₚ(CH₂CH₂O-)ₜ-K,
dans laquelle
K est défini comme ci-dessus dans d) (i),
p est environ 50 et
t est dans la gamme de 18 à 20
et jusqu'à 20 % en poids d'un diphénylméthane diisocyanate choisi dans le groupe formé de
diphénylméthane-4,4'-diisocyanate
diphénylméthane-4,2'-diisocyanate et
diphénylméthane-2,4' diisocyanate, ou
f) un mélange obtenu par mélange de d) et de e).

2. Composition selon la revendication 1, caractérisée en ce que cette composition contient au moins un additif choisi dans le groupe formé d'agents thixotropiques, d'agents antioxydants, d'agents anti-gondolage, d'agents de renforcement, d'agents épaississants, d'agents plastifiants, d'agents stabilisants aux UV, de pigments, de diluants, de dispersants pour pigments et d'inhibiteurs de corrosion, dans des quantités allant de 0,01 à 25 % en poids de la composition totale.

3. Résine de polyuréthanne obtenue en faisant réagir le composant A avec le composant B selon la revendication 1.

4. Résine de polyuréthanne selon la revendication 3, caractérisée en ce que le composant A comprend de l'huile de ricin contenant 2 à 3 % en poids de produit de condensation cyclohexanone/formaldéhyde et le composant A comprend un mélange de polyisocyanates (f), et le rapport du composant A au composant B est d'environ 1:1.

5. Procédé de formation d'une résine de polyuréthanne qui comprend le fait de mélanger ensemble le composant A avec le composant B, les deux composants étant définis comme à la revendication 1.

6. Article revêtu qui comprend un substrat et un revêtement qui adhère sur celui-ci, ledit revêtement comprenant la résine des revendications 3 et 4.

7. Article selon la revendication 6 dans lequel le substrat est une partie de fond d'une automobile.

8. Procédé pour protéger les parties du fond d'automobile contre l'abrasion, qui comprend le fait de revêtir lesdites parties du fond avec la résine des revendications 3 et 4.

9. Procédé selon la revendication 5, caractérisé en ce que le composant A contient un mélange d'environ 70 % en poids d'huile de ricin contenant de 2 à 3 % en poids de produit de condensation cyclohexanone/formaldéhyde et environ 30 % en poids d'un produit de réaction polyester/polyol à partir du néopentylglycol et de l'acide adipique et le composant B qui contient un mélange de polyisocyanates comme défini par le mélange f) à la revendication 1.
